# EUROPEAN PATENT APPLICATION

(11) **EP 1 635 156 A1**
(43) Date of publication of application: **15.03.2006**
(21) Application number: 05108178.4
(22) Date of filing: 07.09.2005
(51) Int. Cl.: G01L 5/10, A63B 24/00, A63B 21/00

(54) **Measuring device**

(30) Priority: 08.09.2004 FI 20045330
(71) Applicant: Tunturi Oy Ltd, 20360 Turku (FI)
(72) Inventor: MÄENPÄÄ, Simo, 20750, TURKU (FI); KUIVALA, Henri, 21880, PÖYTYÄ (FI)
(74) Representative: Valkeiskangas, Tapio Lassi Paavali

(57) **Abstract**

The invention relates to a measuring device for measuring strength/acceleration comprising a frame part (2), which is arranged to be in contact with a power transmitting means (1). The frame part (2) is formed as an independent separate component comprising a gap (3) for receiving the power transmitting means (1) and the gap (3) is provided with a sensor element (4) measuring strength/acceleration. The gap (3) is arranged to be closed, whereby the frame part (2) grips the power transmitting means (1) on both sides of the sensor element and the sensor element (4) comes in contact with the power transmitting means (1) so that the power transmitting means (1) forms a bend in the closed gap and is pressed against the sensor element (4) by means of a force (F2) that is proportional to a force (F1) exerted in the direction of the power transmitting means (1).

## Description

The invention relates to a measuring device for measuring strength/acceleration. The measuring device comprises a frame part, which is arranged to be in contact with a power transmitting means.

What has become a problem as regards fitness equipment, and particularly fitness equipment that employ lifting tackles, is that there are no simple measuring devices/user interfaces allowing exercisers to monitor their training available on the market. The problem is that different measuring devices and similar arrangements are designed for particular devices, meaning that the measuring devices or the like have formed a fixed part of the fitness equipment, and the measuring has therefore become device-specific. A solution in which a wire moves along rolls through the measuring device can be mentioned as an example of such solutions. The measuring device concerned is fixedly mounted to a specific training equipment, and the actual measuring therefore becomes device-specific and consequently the measuring device cannot be moved for instance from one training equipment to another or cannot be purchased as an accessory for a home fitness equipment.

Smart cards have also been used with muscle training equipment in order to store exercise information. A drawback with such solutions is that the exerciser is unable to monitor the training information directly from a smart card, instead a personal computer application, to which possibly the gym keeper only has access, has to be employed for reading the information.

It is an object of the invention to provide a measuring device that allows eliminating the drawbacks associated with the prior art. This object is achieved by means of a measuring device according to the invention. The measuring device according to the invention is characterized in that the frame part is formed as an independent separate component comprising a gap for receiving the power transmitting means and the gap is provided with a sensor element measuring strength/acceleration and that the gap is arranged to be closed, whereby the frame part grips the power transmitting means on both sides of the sensor element and the sensor element comes in contact with the power transmitting means so that the power transmitting means forms a bend in the closed gap and is pressed against the sensor element by means of a force that is proportional to a force exerted in the direction of the power transmitting means.

The most important advantage of the invention is that the measuring device is a personal, compact-sized device that fits into pocket of the user, in other words the measuring device according to the invention can in a very simple manner be transferred from one fitness equipment to another, and the same measuring device can be used for instance with equipment at the gym and at home. The measuring device according to the invention can be used in all types of training equipment, in which a strap, a belt, a chain, a wire or another similar power transmitting means is used for the power transmission of the device. The measuring device according to the invention is suitable for instance for monitoring and measuring strength, work/energy, efficiency, repetitions etc. The measuring device according to the invention is particularly well suited to be used with wire-operating muscle training equipment of what is known as tackle type. The measuring device according to the invention can also be employed with rowers, for instance as a device mounted next to the drawbar. The measuring device according to the invention offers an apparent aid for dynamically measuring strength, or for measuring what is known as velocity strength. In certain sports it is of vital importance to improve velocity strength in particular. A measuring device for velocity strength intended for the masses has not previously been available on the market. An advantage of the measuring device according to the invention is that the device is very versatile and also offers mobility and wireless data transmission, if necessary. The wireless data transmission, for instance a Bluetooth connection, allows improving different gym system applications and communal applications such as spinning rowing competitions etc.

In the following the invention will be explained in greater detail by means of an embodiment shown in the accompanying drawing, in which
Figure 1 schematically shows a side view of a measuring device according to the invention in a situation where the measuring device is mounted on a power transmitting means;
Figure 2 shows the measuring device according to Figure 1 in a situation where the measuring device is fastened to the power transmitting means;
Figure 3 shows a perspective view of the situation shown in Figure 1;
Figure 4 shows a perspective view of the situation shown in Figure 2;
Figure 5 shows a perspective view of the situation shown in Figure 3 from the other side;
Figure 6 shows a perspective view of the situation shown in Figure 4 from the other side, and
Figure 7 schematically shows another embodiment of the invention.

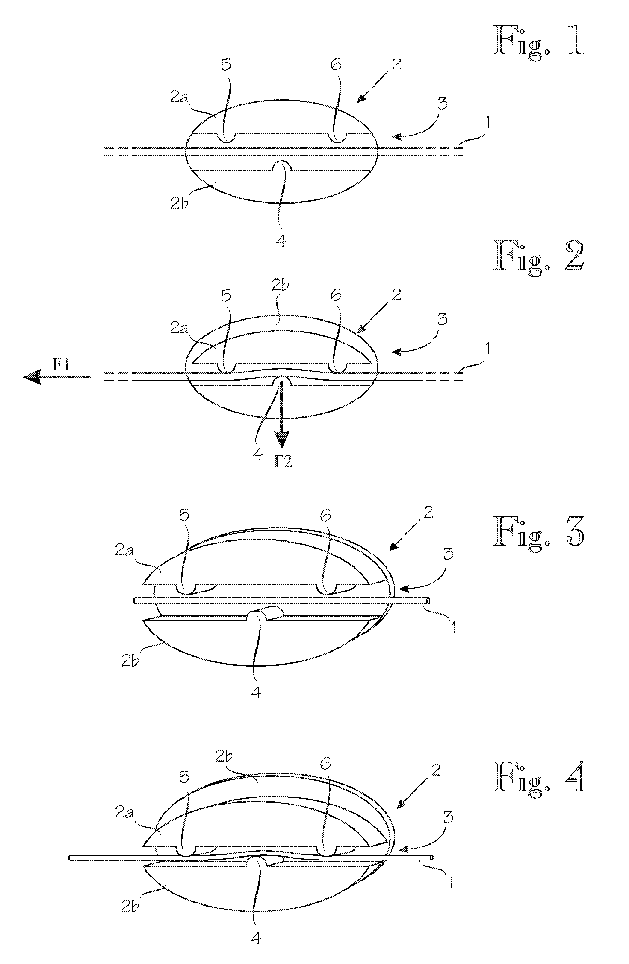

The Figures show an embodiment of a measuring device according to the invention. As shown above the measuring device according to the invention can be used in all types of training equipment, in which a strap, a belt, a chain, a wire or the like is used as the means for transmitting power. In the Figures, such a power transmitting means is indicated with reference numeral 1. The measuring device comprises a frame part 2, which during measuring is arranged to be in contact with the power transmitting means 1. The frame part 2 is formed as an independent separate component, meaning that the device is an independent separate device, which is a small-sized compact unit that fits into a pocket and not for instance a fixed part of any training equipment. The frame part 2 comprises a gap 3 for receiving the power transmitting means. The gap 3 is provided with a sensor element 4 measuring strength/acceleration. The gap 3 is arranged to be closed when the measuring device is fastened to the power transmitting means 1, whereby the frame part 2 grips the power transmitting means on both sides of the sensor element. The points where the frame part grips the power transmitting means 1 on both sides of the sensor element 4 are indicated with reference numerals 5 and 6. The sensor element 4 comes in contact with the power transmitting means 1 so that the power transmitting means 1 forms a bend in the closed gap and is pressed against the sensor element 4 by means of a force F2 that is proportional to a force F1 exerted in the direction of the power transmitting element. The facts described above are particularly clearly indicated in Figures 1 and 2.

The frame part 2 is formed as a component to be opened and then closed again. Thus an easy and a simple fastening and unfastening of the measuring device according to the invention is achieved. In practice, the structure can be implemented by making the frame part structure as a two-part structure, where the parts can be shifted in relation to one another. In the example shown in the Figures the gap 3 is formed by means of a part 2a that is made mobile. Shifting the part 2a in relation to a part 2b enables to close and to open the gap 3 depending on whether the user is fastening the measuring device to the power transmitting means 1 or unfastening the device from the power transmitting means 1. The motion of the part 2a in relation to the part 2b is clearly indicated for instance in Figures 1 and 2 or correspondingly in Figures 3 and 4.

As shown above, mounting the measuring device according to the invention is very simple. The power transmitting means is placed in the open gap 3 of the frame part 2 and then the gap is closed by shifting the part 2a of the frame part 2 for instance as shown in Figures 1 and 2. When the gap 3 is closed as shown above, the sensor part 4 of the measuring device touches the power transmitting means 1, whereby the device measures the desired variable, for instance strength and/or acceleration as previously noted. A situation in which measuring takes place is shown for instance in Figure 2.

Measuring strength/acceleration may be based on different methods known per se, such as strain gauges, pressure sensors, a method of measurement associated with the movement of spring steel etc. The sensor part 4 may be fastened to the frame part by any appropriate means, for instance using a pin, a roll or any other appropriate structure.

The measuring device according to the invention may be provided with electronics in accordance with different needs. Calculation means may for instance be arranged on the frame part 2 for calculating other physical variables occurring on the basis of the measured values. The measuring may therefore include a time factor that can be utilized when managing variables such as work and efficiency etc. that may interest the exerciser in accordance with the principles of physics. The calculation of the variables mentioned above may take place for instance with the calculation means arranged on the frame part. The frame part 2 may naturally be provided with a power source that transfers driving power to the calculation means, for instance. The frame part 2 may further be provided with a memory element, in which the measured and calculated values can be stored. The frame part 2 may also if necessary be provided with display means 7 enabling to display the measured and/or calculated values.

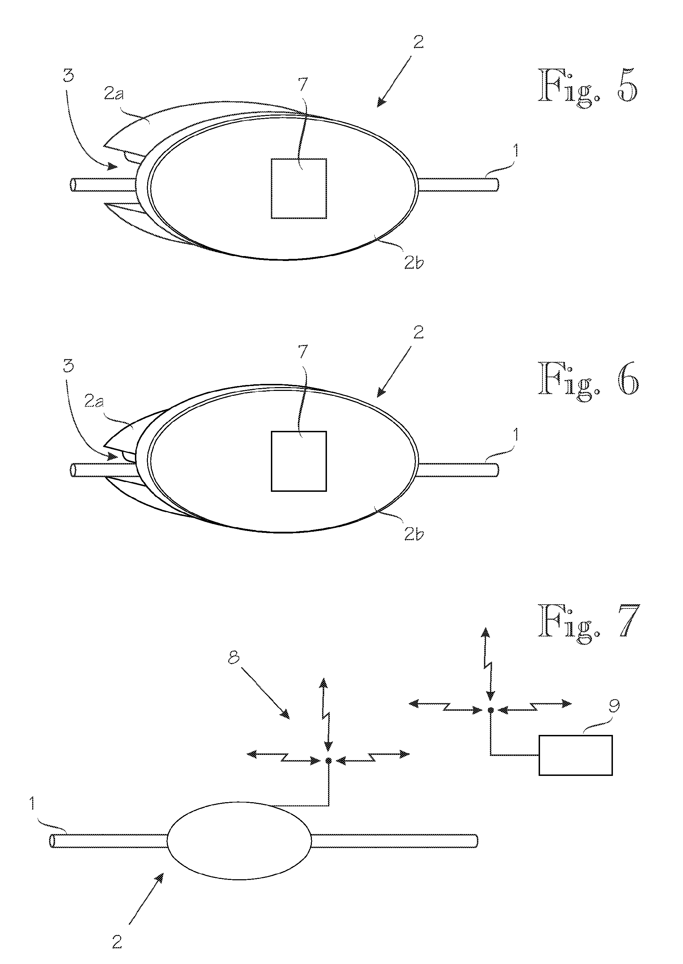

The frame part 2 may further be provided with means 8 for sending the measurement information and/or the calculated information to a terminal 9 outside the frame part. The means 8 may comprise for instance means for providing a wireless connection as shown in Figure 7. The measuring device can therefore be provided with a transmitter that sends the measured and/or calculated information wirelessly to the terminal 9, for instance to a mobile phone or in a gym environment to the mainframe computer of the gym for group training or for a long-term training monitoring. The calculation phase taking place on the basis of the measured values may also occur for instance in the terminal and not necessarily in the specific measuring device as indicated above. The measuring device environment, such as the measuring device + PC/PDA, may be provided with a monitoring and analysing program of the training results.

The embodiment of the invention described above is not intended to restrict the invention in any way, instead the invention may be freely modified within the scope of the claims. It is therefore apparent that the measuring device according to the invention or the parts thereof need not necessarily be such as shown in the Figures but other kinds of solutions are also possible.

## Claims

1. A measuring device for measuring strength/acceleration comprising a frame part (2), which is arranged to be in contact with a power transmitting means (1), **characterized in that** the frame part (2) is formed as an independent separate component comprising a gap (3) for receiving the power transmitting means (1) and the gap is provided with a sensor element (4) measuring strength/acceleration and that the gap (3) is arranged to be closed, whereby the frame part (2) grips the power transmitting means (1) on both sides of the sensor element and the sensor element (4) comes in contact with the power transmitting means (1) so that the power transmitting means (1) forms a bend in the closed gap and is pressed against the sensor element (4) by means of a force (F2) that is proportional to a force (F1) exerted in the direction of the power transmitting means (1).

2. A measuring device as claimed in claim 1, **characterized in that** the frame part (2) is formed as a component to be opened and closed again.

3. A measuring device as claimed in claim 1 or 2, **characterized in that** the frame part (2) is provided with calculation means for calculating other physical variables based on the measured values.

4. A measuring device as claimed in any one of claims 1 to 3, **characterized in that** the frame part (2) is provided with display means (7).

5. A measuring device as claimed in claim 1 or 2, **characterized in that** the frame part (2) is provided with means (8) for sending measurement information to a terminal (9) outside the frame part.

6. A measuring device as claimed in claim 1 or 2, **characterized in that** the frame part (2) is provided with a memory element.

7. A measuring device as claimed in any one of claims 1 to 6, **characterized in that** the sensor element (4) comprises strain gauges, pressure sensors or means based on the movement of spring steel.

8. A measuring device as claimed in claim 5, **characterized in that** the means (8) for sending measurement information comprise means for providing a wireless connection.
